# NOUVEAU FASCICULE DE BREVET EUROPEEN

(11) **EP 1 058 675 B2**
(45) Date de publication et mention de la décision concernant l'opposition: **31.12.2008**
(45) Mention de la délivrance du brevet: 10.09.2003
(21) Numéro de dépôt: 99903776.5
(22) Date de dépôt: 17.02.1999
(51) Int. Cl.: C04B 35/64, C04B 41/00, B23K 26/00, B22F 3/105, B29C 67/00

(54) **PROCEDE DE PROTOTYPAGE RAPIDE PAR FRITTAGE LASER DE POUDRE**
VERFAHREN ZUR SCHNELLEN HERSTELLUNG EINES PROTOTYPES DURCH LASERSINTERUNG
FAST PROTOTYPING METHOD BY LASER SINTERING OF POWDER

(30) Priorité: 19.02.1998 FR 9802217
(43) Date de publication de la demande: 13.12.2000
(73) Titulaire: L'Ecole Nationale Supérieure de Céramique Industrielle ( E.N.S.C.I.), 87065 Limoges Cedex (FR)
(72) Inventeur: HORY, Arnaud, F-87000 Limoges (FR); GAILLARD, Jean-Marie, F-87100 Limoges (FR); ABELARD, Pierre, F-87100 Limoges (FR)
(74) Mandataire: Thébault, Jean-Louis
(86) Numéro de dépôt international: PCT/FR1999/000357
(87) Numéro de publication internationale: WO 1999/042421

(56) Documents cités:
- WO-A2-88/02677
- DE-C- 19 514 740
- US-A- 4 938 816
- US-A- 5 252 264
- US-A- 5 382 308
- SUMAN DAS ET AL: 'Design of a high temperature workstation for the selective laser sintering process, solid freeform fabrication' SYMPOSIUM PROCEEDINGS Septembre 1991, THE UNIVERSITY OF TEXAS AT AUSTIN,

## Description

La présente invention a pour objet un procédé de prototypage rapide par frittage de poudre, notamment de poudre céramique, et un dispositif pour la mise en oeuvre dudit procédé.

Le prototypage rapide est un procédé qui permet d'obtenir des pièces de formes complexes sans outillage et sans usinage, à partir d'une image en trois dimensions de la pièce à réaliser, en frittant des couches superposées de poudres à l'aide d'un laser.

Un premier procédé de prototypage par frittage laser de poudre est décrit dans la demande de brevet internationale WO 96/06881. Il permet notamment d'obtenir des pièces en polymère en frittant en phase liquide des poudres de polymères. Dans ce cas, le niveau de température généré par le laser est relativement faible car les températures de fusion des polymères sont peu élevées, de l'ordre d'une centaine de degrés.

Afin d'obtenir des pièces en matériau plus résistant, il est nécessaire, dans ce cas, d'utiliser un procédé de moulage dit à cire perdue.

Ce procédé de réalisation de pièce résistante est long, et on obtient une précision dimensionnelle relativement médiocre pour certaines applications. En effet, les nombreuses dispersions engendrées par les différents procédés ne permettent pas d'obtenir des dimensions précises, de l'ordre de ±50 µm.

Un deuxième procédé consiste à fritter en phase liquide un mélange de matériaux en poudre, un des matériaux ayant une température de fusion relativement faible, de l'ordre de quelques centaines de degrés. Là encore, le niveau de température généré par le laser est relativement faible en raison de la température de fusion peu élevée d'un des matériaux. On peut noter que le phénomène communément appelé frittage est un frittage en phase liquide et qu'il s'apparente plus à un collage de grains, le matériau à température de fusion peu élevée étant utilisé comme liant. Dans ce cas, la pièce obtenue n'est pas homogène et la précision dimensionnelle est relativement médiocre. Le brevet US-5.382.308 décrit un tel procédé de prototypage rapide qui consiste à déposer sur une cible une couche de poudre comprenant un premier et un second matériaux avec des températures de dissociation différentes, chauffer la couche de poudre jusqu'à une température proche de la température de fusion la plus basse des deux matériaux, irradier une partie sélectionnée de la couche correspondant à une section de l'objet à réaliser de manière à fritter en phase liquide ladite partie sélectionnée. Lors de ce frittage en phase liquide on constate que les grains du premier matériau sont collés avec le second matériau. La pièce obtenue n'est pas homogène.

Un autre procédé de prototypage rapide, décrit dans le brevet US-5.182.170, consiste à faire réagir un matériau en poudre, disposé en couches successives, avec un gaz, en chauffant à l'aide d'un laser. Ainsi, on peut obtenir des pièces à partir de certaines céramiques très résistantes grâce à des réactions chimiques du type nitruration ou cémentation. Mais ce procédé ne peut pas s'appliquer à toutes les céramiques.

Comme on peut le constater, les procédés de l'art antérieur ne permettent pas d'obtenir des pièces homogènes réalisées à partir de poudres céramiques frittées car les températures de fusion des céramiques sont trop élevées.

Les dispositifs associés à ces procédés comprennent en général une cible où sont disposées successivement les couches de poudres frittées, des moyens de mise en couche de la poudre, ainsi que des moyens pour piloter le tir du laser. La pièce réalisée est disposée sur la surface supérieure d'un piston qui peut se translater dans un cylindre dont l'extrémité supérieure constitue la cible.

Le brevet US-5.252.264 décrit un tel dispositif comprenant un laser équipé de moyens de pilotage du tir asservis à une interface informatique, une cellule haute température dans laquelle est disposée une cible pour le faisceau du laser ainsi que des moyens de dépôt d'une couche de matériau à irradier au niveau de la cible, sous forme d'un rouleau. Ce rouleau assure uniquement le transfert de la poudre d'une réserve vers la cible.

Ces dispositifs sont en général utilisés à des températures peu élevées et ne permettent pas d'obtenir des pièces de dimensions précises.

Or pour la réalisation de pièces en céramiques, la précision dimensionnelle est un critère essentiel car la rectification des cotes obtenues à l'issue du procédé n'est possible qu'à l'aide d'un outil en diamant, et reste réservée à de simples interventions ponctuelles sans qu'il puisse être envisagé un usinage.

La présente invention vise donc à proposer un procédé de prototypage rapide par frittage laser de poudres quelconques, et notamment de poudres céramiques.

Elle propose également le dispositif associé, susceptible d'être utilisé à des températures élevées, avoisinants 900°C, et qui permet d'obtenir par frittage laser de poudres une pièce de grande précision dimensionnelle de l'ordre de ±50 µm, c'est-à-dire la moitié de la précision obtenue par les dispositifs de l'art antérieur.

A cet effet, l'invention a pour objet un procédé de prototypage rapide par frittage en phase solide, à l'aide d'un laser, d'une poudre ou d'un mélange de poudres, caractérisé en ce qu'il comprend les étapes qui consistent à :
1/ obtenir une succession de sections superposées numérisées d'un objet à réaliser, à partir d'une image en trois dimensions dudit objet,
2/ étaler sous forme d'une fine couche la poudre ou le mélange de poudres chauffé à une température proche de la température de frittage en phase solide de ladite poudre ou dudit mélange de poudres,
3/ augmenter la densité de la poudre de la couche,
4/ Porter la couche à la température de frittage en balayant à l'aide d'un faisceau laser ladite couche de telle manière qu'une partie sélectionnée de la poudre, qui correspond à une des sections numérisées de l'objet à réaliser, est frittée en phase solide grâce à l'apport complémentaire d'énergie du laser,
les étapes 2, 3 et 4 étant répétées jusqu'à l'obtention de toutes les sections superposées numérisées de l'objet à réaliser.

De préférence, la poudre ou le mélange de poudres est chauffé et maintenu à une température de l'ordre de 300°C à 900°C, et la couche est compactée mécaniquement afin d'augmenter sa densité.

Avantageusement, le laser utilisé est un laser YAG pulsé, et que la longueur d'onde du rayonnement émis se situe dans les infrarouges courts.

L'invention a également pour objet un dispositif pour la mise en oeuvre dudit procédé caractérisé en ce qu'il comprend un laser équipé de moyens de pilotage du tir asservis à une interface informatique, une cellule haute température, munie de moyens de chauffage et d'une cible pour un faisceau du laser, et des moyens de mise en couche, disposés dans ladite cellule, susceptibles de disposer sur la cible une couche de poudre.

Selon un mode de réalisation préféré, il comprend des moyens de compactage, disposés dans la cellule haute température, susceptibles de compacter la couche avant frittage.

D'autres caractéristiques et avantages ressortiront de la description qui représente un mode de réalisation préféré, description donnée à titre d'exemple uniquement, en référence aux dessins annexés sur lesquels:
- Figure 1 est un schéma de principe du procédé de l'invention,
- Figure 2 est une coupe longitudinale du dispositif selon l'invention,
- Figure 3 est une coupe transversale du dispositif, et
- Figures 4A à 4E montrent un synoptique du fonctionnement du dispositif.

Selon l'invention, le procédé de prototypage rapide par frittage laser d'une poudre céramique ou d'un mélange de poudres céramiques comprend les étapes qui consistent à:
1/ obtenir une succession de sections 10 superposées numérisées d'un objet 12 à réaliser, à partir d'une image en trois dimensions dudit objet,
2/ étaler sous forme d'une fine couche 14 la poudre céramique ou le mélange de poudres céramiques chauffé à une température proche de la température de frittage en phase solide de ladite poudre ou dudit mélange,
3/ augmenter la densité de la poudre de la couche 14,
4/ porter la couche à la température de frittage en balayant à l'aide d'un faisceau laser 16 ladite couche de telle manière qu'une partie 18 sélectionnée de la poudre, qui correspond à une des sections 10' numérisées de l'objet 12 à réaliser, est frittée en phase solide grâce à l'énergie du laser.

Les étapes 2, 3 et 4 sont répétées jusqu'à l'obtention de toutes les sections superposées numérisées de l'objet à réaliser.

Ce procédé de prototypage rapide par frittage laser peut être utilisé pour le frittage d'une poudre ou d'un mélange de poudres céramiques quelconques.

Lors de l'étape 1, l'objet 12, représenté par une image numérisée en trois dimensions, est tranché à l'aide d'un logiciel afin d'obtenir une succession de sections 10 superposées numérisées.

Lors de l'étape 2, la poudre céramique ou le mélange de poudres céramiques est étalé sous forme d'une fine couche 14 d'épaisseur de l'ordre de 200 µm. La poudre céramique ou le mélange de poudres céramiques est préalablement chauffé et maintenu à une température de 900°C durant le procédé afin d'augmenter la rapidité de réalisation de l'objet et de réduire l'énergie apportée par le laser 16 comme cela va être expliqué.

Lors de l'étape 3, on augmente la densité de la couche 14, afin de diminuer sa porosité, en la compactant par exemple. On obtient ainsi une couche 14 d'épaisseur de l'ordre de 100 µm.

Lors de l'étape 4, on réalise le frittage en phase solide d'une partie 18 sélectionnée de la couche 14 en dirigeant le rayon laser 16 afin qu'il reproduise une des sections superposées numérisées 10'. Selon le procédé, on utilise un frittage en phase solide, c'est-à-dire que la température de frittage reste inférieure à la température de fusion des poudres céramiques utilisées.

Ainsi, lors du frittage, dans un premier temps, des zones de raccordement, appelées joints de grains se forment entre particules en contact, puis dans un second temps, la porosité résiduelle entre grains disparaît grâce aux phénomènes de diffusion et d'écoulement plastique. Ce frittage est d'autant plus rapide que la poudre frittée est préalablement compactée et chauffée.

Ainsi, en chauffant la poudre, l'énergie du laser ne sert qu'à apporter la quantité de chaleur nécessaire à l'élévation de la température de la poudre de 900°C à la température de frittage. De ce fait, on réduit l'énergie apportée par le laser et on augmente la vitesse de réalisation de l'objet.

De même, en compactant préalablement la couche 14 de poudre céramique, on diminue la porosité de la poudre, ce qui permet d'avoir en début de frittage une porosité résiduelle moins importante, et qui contribue également à augmenter la vitesse de réalisation.

De préférence, le laser utilisé est un laser YAG pulsé, et la longueur d'onde du rayonnement émis se situe dans les infrarouges courts. Plus précisément, le faisceau laser a une longueur d'onde de 1064 nm.

Pour les poudres céramiques qui n'absorbent pas les rayonnements infrarouges, on utilise un dopant, par exemple du silicate de zirconium, afin que le mélange ainsi obtenu absorbe le rayonnement infrarouge émis par le laser.

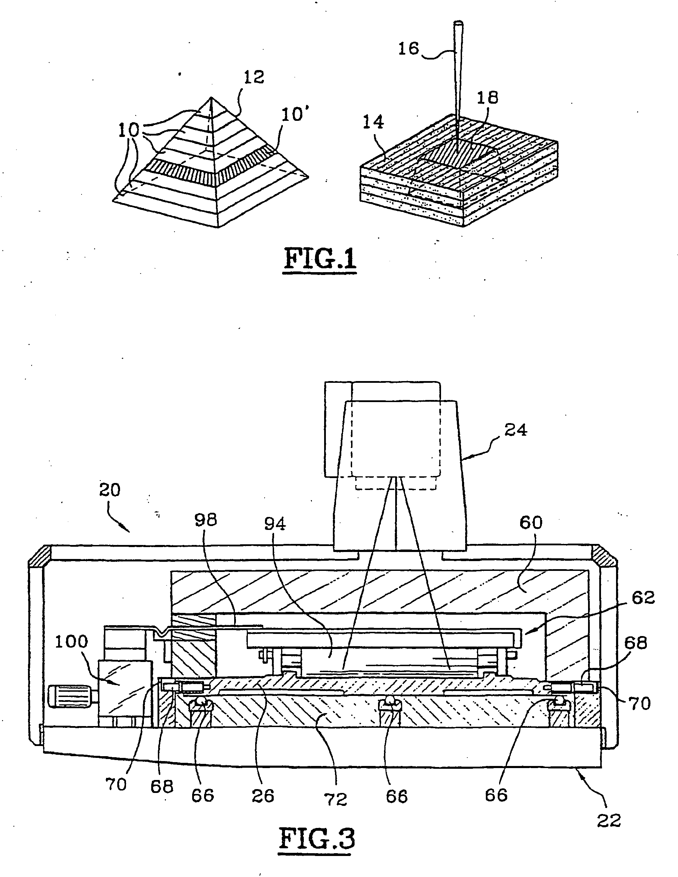

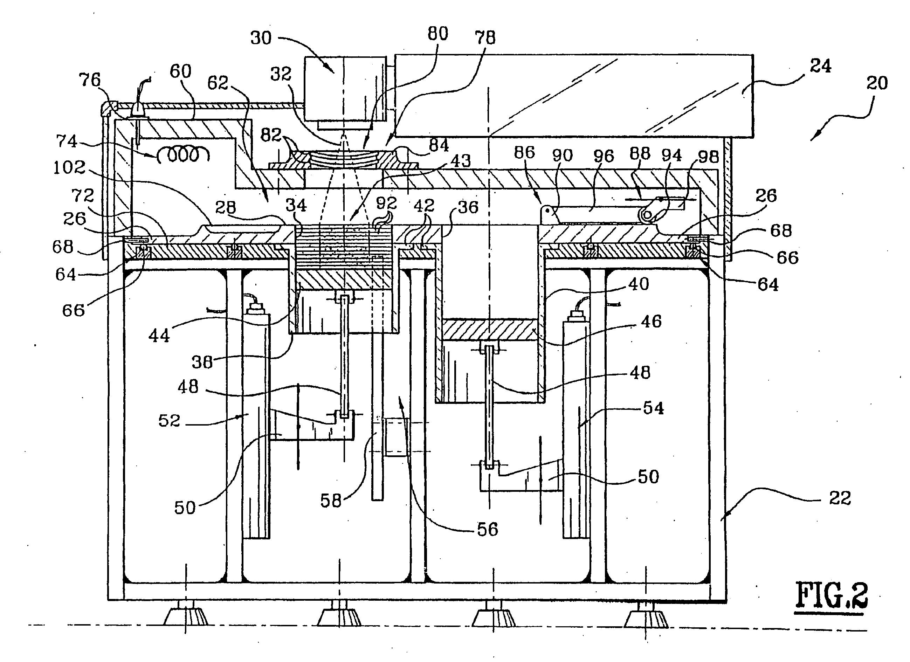

Sur les figures 2 et 3, on a représenté un dispositif 20 pour la mise en oeuvre d'un procédé de prototypage rapide par frittage laser de poudre céramique. Il est associé à une interface informatique (non représentée) qui permet à partir d'une image en trois dimensions de l'objet à réaliser, de trancher ledit objet en plusieurs couches. Cette interface est susceptible également de piloter les différents éléments du dispositif 20 comme cela va être décrit ci-après.

Le dispositif 20 comprend un bâti 22, placé en dessous d'un laser 24, et une plaque 26 horizontale, disposée en partie supérieure du bâti 22, et dont la surface supérieure 28 définit un plan de travail.

Le laser 24 comprend des moyens 30 de pilotage du tir, asservis à l'interface informatique, qui permettent notamment de diriger le rayon 32.

Ces moyens 30 de pilotage du tir sont connus de l'homme du métier, et ne font en aucun cas partie de la présente demande.

La plaque 26 comprend deux orifices cylindriques 34, 36 qui sont prolongés sous la plaque 26 par un premier cylindre 38 et un second cylindre 40 dont les diamètres intérieurs sont égaux à ceux des orifices 34, 36. Chaque cylindre est fixé grâce à une collerette 42 à la face inférieure de la plaque 26 par des moyens de fixation non représentés, des vis par exemple.

Le premier cylindre 38, prolongé par l'orifice 34, est appelé cylindre de travail. Il est placé en dessous du rayon 32 du laser, et son extrémité supérieure, qui affleure au plan de travail 28, définit une cible 43 pour ledit rayon. En complément, le second cylindre 40, prolongé par l'orifice 36, et disposé à proximité du premier 38, sert de réservoir de matière première en poudre céramique.

Des pistons 44, 46 sont prévus pour être déplacés en translation respectivement dans les cylindres 38, 40. Chaque piston 44, 46 est fixé à l'extrémité supérieure d'une biellette 48, dont l'extrémité inférieure est fixée à un bras 50 lié à des moyens 52 et 54 de pilotage des pistons 44, 46 respectivement. Ces moyens 52 et 54 de pilotage, réalisés par exemple par un moteur pas à pas, sont asservis à l'interface informatique qui commande la montée ou la descente desdits pistons.

Des moyens 56 de mesure de la hauteur réelle de la surface supérieure du piston 44 sont prévus, pour compenser les dispersions dimensionnelles engendrées par les liaisons mécaniques et/ou les déformations par dilatation des différents éléments, afin d'obtenir une précision dimensionnelle de l'ordre de ±50 µm. Ces moyens 56 de mesure sont réalisés par une règle 58 à lecture optique, verticale, fixée au bâti 22, à proximité du cylindre 38 de travail.

Au-dessus de la plaque 26, une enceinte 60 thermiquement isolante permet de délimiter avec la plaque 26 une cellule 62 haute température. La plaque 26 est reliée au bâti 22 par des moyens 64 de liaison isolants qui permettent de limiter la propagation des déformations dues aux dilatations de la plaque 26 vers le bâti 22. Selon un mode de réalisation préférentiel, ces moyens 64 de liaison isolants comportent d'une part des billes 66 disposées en partie supérieure du bâti 22, sur lesquelles la plaque 26 repose, et d'autre part des pions 68, fixés sur les côtés de la plaque 26, qui reposent dans des logements 70 du bâti 22 visibles sur la figure 3.

En complément, une couche 72 de matériau isolant est disposée sous la plaque 26 afin de rendre la cellule 62 haute température le plus adiabatique possible.

D'autre part, des moyens 74 de chauffage, réalisés par une résistance, sont disposés à l'intérieur de la cellule 62, afin de chauffer l'atmosphère de la cellule à une température de l'ordre de 900°C. En complément, des moyens 76 de contrôle de la température, réalisés par un thermocouple, permettent de réguler la température à l'intérieur de la cellule.

Un hublot 78, de diamètre sensiblement égal au cylindre 38 de travail, est ménagé dans l'enceinte 60 thermiquement isolante au droit du rayon 32 et du cylindre 38 de travail. Ce hublot 78 qui est thermiquement isolant, comprend des moyens 80 de filtrage, qui laissent passer les rayonnements infrarouges courts du laser vers le cylindre 38 de travail, mais qui filtrent les rayonnements émis par le corps noir que constitue la cellule 62 haute température, vers le laser 24. Ces moyens 80 de filtrage permettent de limiter l'échauffement de la tête du laser 24 lors de son fonctionnement. Ils sont réalisés par deux lentilles 82 superposées, susceptibles de résister aux températures élevées, disposées dans un support 84 de lentilles.

Sur le plan de travail 28, des moyens 86 de mise en couche et des moyens 88 de compactage peuvent se translater dans la direction définie par la droite reliant les centres des cylindres 38, 40.

Les moyens 86 de mise en couche, réalisés par une raclette 90, permettent de transférer la poudre céramique du réservoir 40 vers le cylindre de travail 38, afin de disposer la poudre sous forme de couches 92 successives d'égales épaisseurs dans le cylindre de travail 38.

Les moyens 88 de compactage, réalisés par un rouleau 94 de compactage, permettent de compacter la poudre de la couche 92 avant son frittage.

Deux biellettes 96, disposées à chaque extrémité du rouleau 94, permettent de relier la raclette 90 au rouleau 94 de compactage qui est fixé à un bras 98 lié à des moyens 100 de pilotage des moyens 86 de mise en couche et 88 de compactage. Ces moyens 100 de pilotage, réalisés par exemple par un moteur pas à pas, sont également asservis à l'interface informatique qui gère en même temps que les déplacements des pistons 44, 46, les déplacements de la raclette 90 et du rouleau 94 comme cela sera expliqué ultérieurement.

Une cavité 102 est également ménagée sur le plan de travail 28 à côté de l'orifice 34, diamétralement opposée à l'orifice 36. Cette cavité est susceptible de recevoir le surplus de poudre lorsque la raclette 90 transfère la poudre du réservoir 40 vers le cylindre de travail 38.

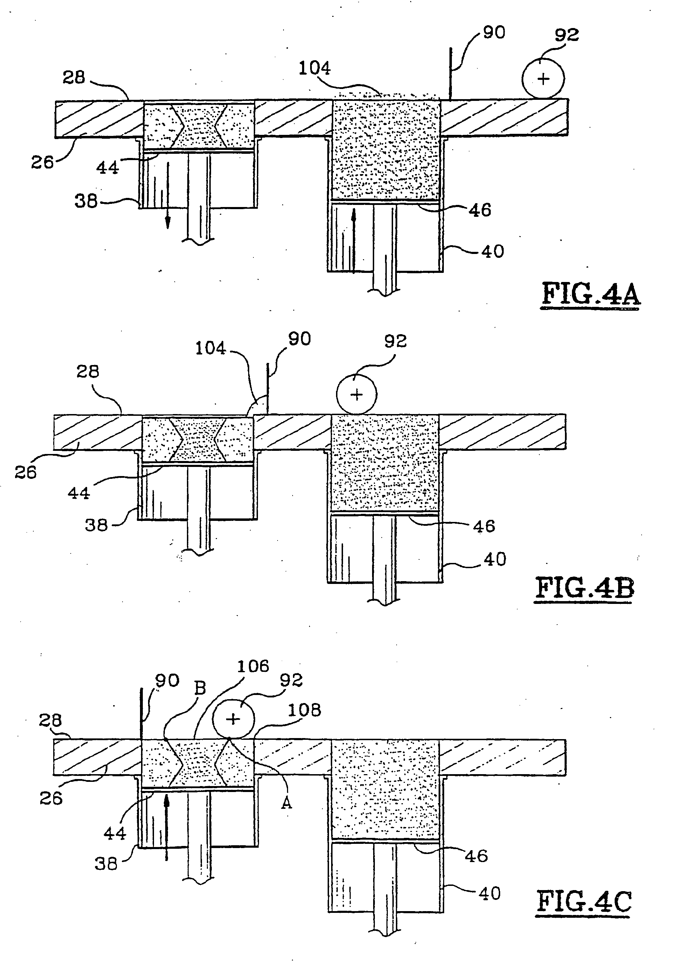

Le fonctionnement est maintenant décrit au regard des figures 4A à 4E.

Sur la figure 4A, on a représenté de façon schématique le dispositif à la phase 0 du procédé. Lors de cette phase, le piston 44 du cylindre de travail descend de 200 µm, alors que le piston 46 du réservoir 40 monte de 200 µm afin de placer un volume 104 de poudre céramique au-dessus du plan de travail 28.

Lors de la phase 1, représentée sur la figure 4B, la raclette 90 pousse le volume 104 de poudre céramique, et l'étale uniformément sous forme d'une couche 106 dans le cylindre 38 de travail. Le volume 104 de poudre doit être suffisant pour éviter le manque de poudre dans le cylindre 38 de travail, et pour obtenir une couche 106 qui affleure au plan de travail 28.

Lors de la phase 2, représentée sur la figure 4C, la raclette 90 a fini d'étaler la quantité 104 de poudre, et le rouleau 92 se situe au point A situé à la surface de la couche 106 à proximité d'un premier point de tangence 108 dudit rouleau avec le cylindre 38 de travail. A cet instant, le piston 44 du cylindre 38 de travail remonte de 100 µm si bien qu'une portion de la couche 106 est placée au-dessus du plan de travail. Le rouleau 92 compacte alors une zone 110 de la couche 106 qui s'étend du point A au point B situé à la surface de la couche 106 à proximité d'un second point de tangence 112 dudit rouleau avec le cylindre 38 de travail.

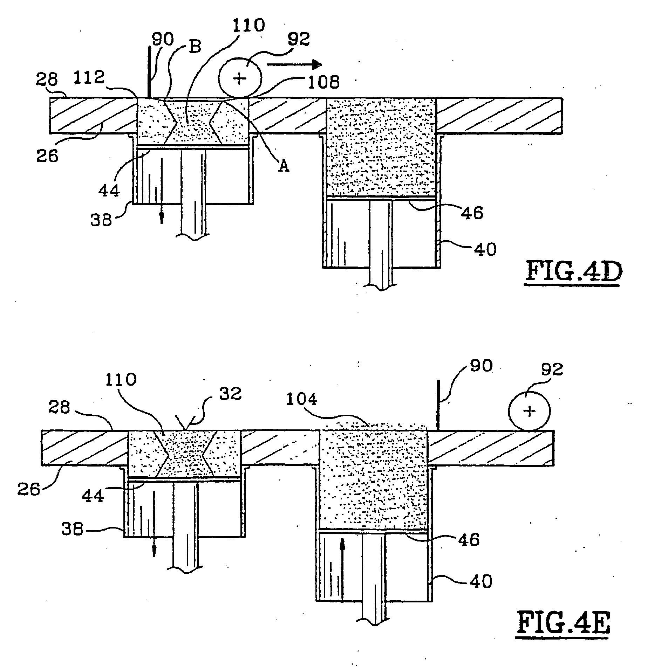

Lors de la phase 3, représentée sur la figure 4D, le piston 44 du cylindre de travail descend de 100 µm, afin d'éviter le compactage des bords du cylindre 38 de travail. Le rouleau 92, ainsi que la raclette 90, reviennent en position initiale illustrée sur la figure 4A.

Lors de la phase 4, représentée sur la figure 4E, la poudre céramique située dans la zone 110 compactée est frittée selon le procédé de l'invention, afin d'obtenir la forme de l'objet. Après le frittage, le piston du cylindre de travail descend de 10 µm, et le piston 46 du réservoir monte de 200 µm, afin de placer un nouveau volume 104' de poudre céramique au-dessus du plan de travail 28 et d'enchaîner sur la phase 1.

Ainsi, les phases 1, 2, 3, et 4 sont répétées pour chaque nouvelle couche jusqu'à l'obtention de l'objet souhaité. Durant toutes ces phases, les moyens 74 de chauffage maintiennent la cellule 62 à une température de l'ordre de 900°C. Ainsi, la poudre frittée est déjà à une température de l'ordre de 900°C, ce qui permet de limiter la quantité d'énergie nécessaire pour le frittage et d'augmenter la vitesse de réalisation de l'objet.

Le procédé de l'invention et le dispositif associé ont été décrits pour la réalisation de pièces à partir de poudres céramiques, mais on peut envisager exactement de la même façon, par simple adaptation des différents paramètres, leur utilisation pour l'obtention de pièces à partir de poudres de matériaux quelconques, et notamment de poudres métalliques.

## Revendications

1. Procédé de prototypage rapide, à l'aide d'un laser, d'une poudre ou d'un mélange de poudres, notamment céramique, comprenant les étapes qui consistent à :
1/ obtenir une succession de sections (10) superposées numérisées d'un objet (12) à réaliser, à partir d'une représentation en trois dimensions dudit objet,
2/ étaler sous forme d'une fine couche (14) la poudre ou le mélange de poudres chauffé une température proche de la température de frittage de ladite poudre ou dudit mélange de poudres,
3/ Porter à la température de frittage en balayant à l'aide d'un faisceau laser (16) une partie (18) sélectionnée de la couche, qui correspond à une des sections (10') numérisées de l'objet (12) à réaliser,
les étapes 2 et 3 étant répétées jusqu'à l'obtention de toutes les sections superposées numérisées de !'objet à réaliser, **caractérisé en ce que** la partie (18) sélectionnée de la couche est frittée en phase solide grâce à l'apport complémentaire d'énergie du laser et **en ce qu'**on augmente la densité de la poudre ou du mélange de poudres de la couche (14) préalablement au frittage.

2. Procédé selon la revendication 1, **caractérisé en ce que** la poudre ou le mélange de poudres est chauffé et maintenu à une température de l'ordre de 300°C à 900°C.

3. Procédé selon la revendication 1 ou 2, **caractérisé en ce que** la couche (14) est compactée mécaniquement afin d'augmenter sa densité.

4. Procédé selon l'une quelconque des revendications précédentes, **caractérisé en ce que** le laser utilisé est un laser YAG pulsé, et que la longueur d'onde du rayonnement émis se situe dans les infrarouges courts.

## Claims

1. A method of rapid prototyping, by means of a laser, of a powder or mixture of powders, in particular ceramic, comprising the steps of:
1) obtaining a succession of superimposed and digitised cross-sections (10) of an object (12) to be produced, from a three-dimensional representation of said object,
2) spreading, in the form of a fine layer (14), the powder or mixture of powders heated to a temperature close to the sintering temperature of said powder or said mixture of powders,
3) raising to the sintering temperature by sweeping using a laser beam (16), a selected part (18) of the layer which corresponds to one of the digitised cross-sections (10') of the object (12) to be produced,
steps 2 and 3 being repeated until all the superimposed digitised cross-sections of the object to be produced have been obtained, **characterised in that** the selected part (18) of the layer is sintered in the solid phase by virtue of the supplementary addition of energy from the laser and **in that** the density of the powder or mixture of powders in the layer (14) is increased prior to sintering.

2. A method according to claim 1, **characterised in that** the powder or mixtu re of powders is heated and maintained at a temperature of around 300°C to 900°C.

3. A method according to claim 1 or 2, **characterised in that** the layer (14) is mechanically compacted in order to increase its density.

4. A method according to any one of the preceding claims, **characterised in that** the laser used is a pulsed YAG laser and **in that** the wavelength of the radiation emitted is situated in the short infrared.

## Patentansprüche

1. Verfahren zur schnellen Herstellung eines Prototyps mit Hilfe eines Lasers aus einem insbesondere keramischen Pulver oder aus einem Gemisch von solchen Pulvern, das die Schritte umfaßt, die darin bestehen:
1/ eine Folge von digital dargestellten, überlagerten Abschnitten (10) eines zu verwirklichenden Objekts (12) anhand einer dreidimensionalen Darstellung des Objekts zu erhalten,
2/ das Pulver oder das Gemisch von Pulvern, das auf eine Temperatur in der Umgebung der Sintertemperatur des Pulvers oder des Gemisches von Pulvern erhitzt ist, in Form einer dünnen Schicht (14) auszubreiten,
3/ Halten eines ausgewählten Teils (18) der Schicht, der einem der digital dargestellten Abschnitte (10') des zu verwirklichenden Objekts (12) entspricht, auf der Sintertemperatur, indem er mit Hilfe eines Laserstrahlenbündels (16) überstrichen wird,
wobei die Schritte 2 und 3 wiederholt werden, bis sämtliche digital dargestellten überlagerten Abschnitte des zu verwirklichenden Objekts erhalten worden sind, **dadurch gekennzeichnet, daß** der ausgewählte Teil (18) der Schicht kraft der ergänzenden Energiezufuhr durch den Laser in die feste Phase gesintert wird und daß die Dichte des Pulvers oder des Gemisches von Pulvern der Schicht (14) vor dem Sintern erhöht wird.

2. Verfahren nach Anspruch 1, **dadurch gekennzeichnet, daß** das Pulver oder das Gemisch von Pulvern auf eine Temperatur in der Größenordnung von 300 °C bis 900 °C erhitzt und auf dieser Temperatur gehalten wird.

3. Verfahren nach Anspruch 1 oder 2, **dadurch gekennzeichnet, daß** die Schicht (14) mechanisch verdichtet wird, um ihre Dichte zu erhöhen.

4. Verfahren nach einem der vorhergehenden Ansprüche, **dadurch gekennzeichnet, daß** der verwendete Laser ein gepulsterYAG-Laser ist und daß die Wellenlänge der ausgesendeten Strahlung im Bereich kurzer Infrarotwellen liegt.
